# EUROPEAN PATENT APPLICATION

(11) **EP 2 955 865 A1**
(43) Date of publication of application: **16.12.2015**
(21) Application number: 13877871.7
(22) Date of filing: 12.03.2013
(51) Int. Cl.: H04L 1/00

(54) **METHOD, APPARATUS AND SYSTEM FOR IDENTIFYING TRANSMISSION POINTS**

(71) Applicant: Huawei Technologies Co., Ltd., Longgang District Shenzhen, Guangdong 518129 (CN)
(72) Inventor: ZHAO, Yueying, Shenzhen Guangdong 518129 (CN); WANG, Zongjie, Shenzhen Guangdong 518129 (CN)
(74) Representative: Pfenning, Meinig & Partner GbR
(86) International application number: PCT/CN2013/072471
(87) International publication number: WO 2014/139090

(57) **Abstract**

Embodiments of the present invention provide a method, an apparatus, and a system for identifying a transmission point. The method includes: measuring, by a mobile terminal, pilot quality of transmission points in a soft cell in which the mobile terminal is located, and selecting one target transmission point according to a measurement result and a preset rule to receive downlink data; and processing, by the mobile terminal, uplink data according to feature information corresponding to the target transmission point, and sending processed uplink data, so that the target transmission point parses the uplink data after receiving the uplink data, and determines, according to a parsing result, that a transmission point that is selected by the mobile terminal for receiving downlink data is the target transmission point. This may implement that base stations in a soft cell identify a base station that is selected by a mobile terminal for receiving downlink data.

## Description

### TECHNICAL FIELD

Embodiments of the present invention relate to mobile communications technologies, and in particular, to a method for identifying a transmission point, an apparatus, and a system.

### BACKGROUND

Currently, in soft cell (that is, a soft cell or a shared cell) networking mode, a micro cell (that is, a micro cell) corresponding to a micro base station network is regarded merely as a part of a macro cell (that is, a macro cell) corresponding to a macro cellular network, rather than as a logically independent cell. Therefore, in soft cell networking mode, when a mobile terminal is connected to any base station in the macro cellular network or the micro base station network, the mobile terminal measures pilot quality of the base station; moreover, the mobile terminal may further measure pilot quality of another base station in a soft cell, and select a base station having best pilot quality from them for receiving downlink data.

The prior art has the following disadvantages: no solution is available in the prior art concerning how base stations in a soft cell identify a base station that is selected by a mobile terminal and for receiving downlink data.

### SUMMARY

Embodiments of the present invention provide a method, an apparatus, and a system for identifying a transmission point, which may resolve a problem in the prior art concerning how base stations in a soft cell identify a base station that is selected by a mobile terminal for receiving downlink data.

According to one aspect, an embodiment of the present invention provides a method for identifying a transmission point, including:
measuring, by a mobile terminal, pilot quality of transmission points in a soft cell in which the mobile terminal is located, and selecting one target transmission point according to a measurement result and a preset rule to receive downlink data; and
processing, by the mobile terminal, uplink data according to feature information corresponding to the target transmission point, and sending processed uplink data, so that the target transmission point parses the uplink data after receiving the uplink data, and determines, according to a parsing result, that a transmission point that is selected by the mobile terminal for receiving downlink data is the target transmission point.

According to another aspect, an embodiment of the present invention provides a method for identifying a transmission point, including:
receiving uplink data sent by a mobile terminal, where the uplink data is data that is processed by the mobile terminal according to feature information corresponding to a target transmission point; and
parsing the uplink data, and determining, according to a parsing result, whether a transmission point that is selected by the mobile terminal for receiving downlink data in a soft cell is the target transmission point.

According to another aspect, an embodiment of the present invention provides a mobile terminal, including:
a measuring module, configured to measure pilot quality of transmission points in a soft cell in which the mobile terminal is located;
a selecting module, configured to select one target transmission point according to a measurement result obtained by the measuring module and a preset rule to receive downlink data;
a processing module, configured to process uplink data according to feature information corresponding to the target transmission point; and
a sending module, configured to send processed uplink data, so that the target transmission point parses the uplink data after receiving the uplink data, and determines, according to a parsing result, that a transmission point that is selected by the mobile terminal for receiving downlink data is the target transmission point.

According to another aspect, an embodiment of the present invention provides a transmission point device, including:
a receiving module, configured to receive uplink data sent by a mobile terminal, where the uplink data is data that is processed by the mobile terminal according to feature information corresponding to a target transmission point; and
a determining module, configured to parse the uplink data, and determine, according to a parsing result, whether a transmission point that is selected by the mobile terminal for receiving downlink data in a soft cell is the target transmission point.

According to another aspect, an embodiment of the present invention provides a network system, including the mobile terminal and the transmission point device described above.

According to another aspect, an embodiment of the present invention provides a mobile terminal, including a first processor and a sender, where:
the first processor is configured to measure pilot quality of transmission points in a soft cell in which the mobile terminal is located; select one target transmission point according to a measurement result obtained by the measuring module and a preset rule to receive downlink data; and process uplink data according to feature information corresponding to the target transmission point; and
the sender is configured to send the uplink data processed by the first processor, so that the target transmission point parses the uplink data after receiving the uplink data, and determines, according to a parsing result, that a transmission point that is selected by the mobile terminal for receiving downlink data is the target transmission point.

According to another aspect, an embodiment of the present invention provides a transmission point device, including a receiver and a second processor, where:
the receiver is configured to receive uplink data sent by a mobile terminal, where the uplink data is data that is processed by the mobile terminal according to feature information corresponding to a target transmission point; and
the second processor is configured to parse the uplink data received by the receiver, and determine, according to a parsing result, whether a transmission point that is selected by the mobile terminal for receiving downlink data in a soft cell is the target transmission point.

According to another aspect, an embodiment of the present invention provides a network system, including the mobile terminal and the transmission point device described above.

It can be learned from the foregoing technical solutions that, in the embodiments of the present invention, a mobile terminal measures pilot quality of transmission points in a soft cell in which the mobile terminal is located, and selects one target transmission point according to a preset rule; then, the mobile terminal processes uplink data according to feature information corresponding to the target transmission point and sends processed uplink data; and after receiving the uplink data, the target transmission point determines, after successfully parsing the uplink data, that a transmission point that is selected by the mobile terminal for receiving downlink data is the target transmission point. This may resolve a problem in the prior art concerning how base stations in a soft cell identify a base station that is selected by a mobile terminal for receiving downlink data.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show some embodiments of the present invention, and a person of ordinary skill in the art may still derive other drawings from these accompanying drawings without creative efforts.
FIG. 1 is a flowchart of an embodiment of a method for identifying a transmission point according to an embodiment of the present invention;
FIG. 2 is a flowchart of another embodiment of a method for identifying a transmission point according to an embodiment of the present invention;
FIG. 3 is a schematic structural diagram of an embodiment of a mobile terminal according to an embodiment of the present invention;
FIG. 4 is a schematic structural diagram of an embodiment of a transmission point device according to an embodiment of the present invention;
FIG. 5 is a schematic structural diagram of an embodiment of a network system according to an embodiment of the present invention;
FIG. 6 is a schematic structural diagram of another embodiment of a mobile terminal according to an embodiment of the present invention;
FIG. 7 is a schematic structural diagram of another embodiment of a transmission point device according to an embodiment of the present invention; and
FIG. 8 is a schematic structural diagram of another embodiment of a network system according to an embodiment of the present invention.

### DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

Embodiments of the present invention may be used to identify a transmission point. More specifically, the embodiments of the present invention are used to identify a transmission point in a soft cell networking manner. In the soft cell networking manner, cells of one soft cell include a cell and a transmission point, where the cell is used to transmit a synchronization channel, a broadcast channel, and a common pilot channel, and a mobile terminal may acquire system information of the cell by searching for the cell; and the transmission point is used to transmit downlink data and a control channel of the transmission point, and the mobile terminal may receive the downlink data sent by the transmission point. In the soft cell networking manner, the cell may send a data channel, or may not send a data channel. The transmission point sends only data and the control channel of the transmission point, and a channel quality indicator (Channel Quality Indicator, CQI for short) measurement pilot channel. In the soft cell networking manner, a micro cell is regarded merely as a part of a macro cell, rather than as a logically independent cell. Therefore, in the soft cell networking manner, the mobile terminal may measure pilot quality of transmission points in a soft cell in which the mobile terminal is located. A method, an apparatus, and a system for identifying a transmission point according to the embodiments of the present invention may resolve a problem in the prior art concerning how base stations in a soft cell identify a base station that is selected by a mobile terminal and used to receive downlink data. A transmission point device in the embodiments of the present invention is the foregoing base station.

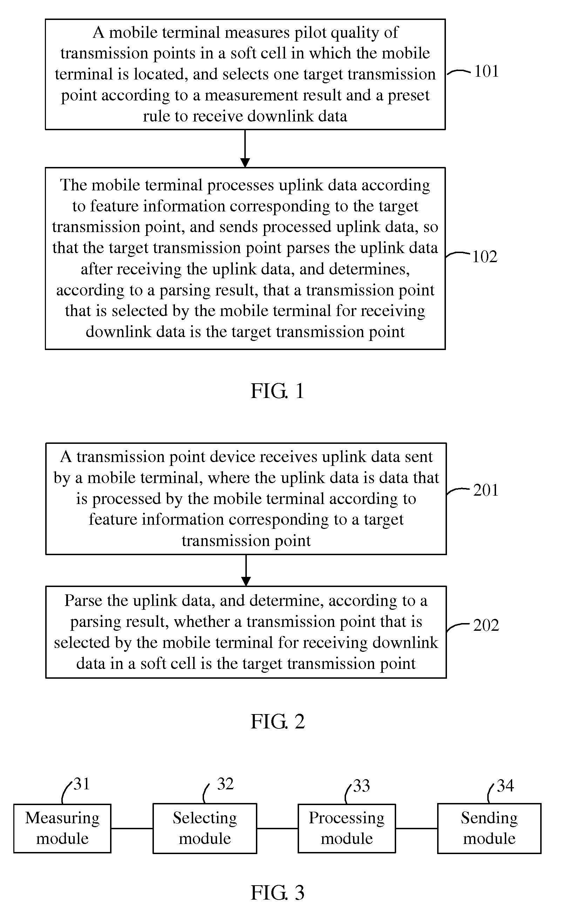

FIG. 1 is a flowchart of an embodiment of a method for identifying a transmission point according to an embodiment of the present invention. As shown in FIG. 1, this embodiment includes the following:
101. A mobile terminal measures pilot quality of transmission points in a soft cell in which the mobile terminal is located, and selects one target transmission point according to a measurement result and a preset rule to receive downlink data.

Optionally, the pilot quality is evaluated by using a signal-to-noise ratio of a pilot, or may be evaluated by using signal power of a pilot.

Optionally, that a mobile terminal measures pilot quality of transmission points in a soft cell in which the mobile terminal is located includes that:
the mobile terminal descrambles and despreads a pilot channel according to a scrambling code and a channelization code that are previously known; estimates noise energy by using a signal coherence method; estimates total energy of the pilot channel; obtains signal energy by subtracting the noise energy obtained by means of estimation from the total energy of the pilot channel obtained by means of estimation; and divides the signal energy by the noise energy to obtain the signal-to-noise ratio of the pilot, that is, the pilot quality.

The scrambling code and the channelization code that are previously known may be assigned in advance by a radio network controller (Radio Network Controller, RNC for short) to the mobile terminal.

The target transmission point may send downlink data.

The mobile terminal may receive the downlink data sent by the target transmission point.

Optionally, the preset rule is to select a transmission point with best pilot quality. This is merely an example, and no limit is set thereto.

Optionally, the best pilot quality may be pilot quality whose value is largest.

Optionally, that a mobile terminal selects one target transmission point according to a measurement result and a preset rule to receive downlink data is specifically that:
the mobile terminal selects a transmission point with best pilot quality according to the measurement result as the target transmission point to receive the downlink data sent by the target transmission point.

102: The mobile terminal processes uplink data according to feature information corresponding to the target transmission point, and sends processed uplink data, so that the target transmission point parses the uplink data after receiving the uplink data, and determines, according to a parsing result, that a transmission point that is selected by the mobile terminal for receiving downlink data is the target transmission point.

The mobile terminal may send the uplink data to the target transmission point and another transmission point.

No transmission point in the soft cell other than the target transmission point can successfully parse the processed uplink data.

One solution is that, the feature information is a scrambling code pair uniquely corresponding to the target transmission point, the scrambling code pair includes an uplink scrambling code and a downlink scrambling code, and correspondingly, that the mobile terminal processes uplink data according to feature information corresponding to the target transmission point, and sends processed uplink data, so that the target transmission point parses the uplink data after receiving the uplink data, and determines, according to a parsing result, that a transmission point that is selected by the mobile terminal for receiving downlink data is the target transmission point includes that:
the mobile terminal performs scrambling processing on the uplink data by using the uplink scrambling code corresponding to the target transmission point, and sends scrambled uplink data, where if the target transmission point successfully parses out the uplink data according to the corresponding uplink scrambling code after receiving the uplink data, the target transmission point determines that the transmission point that is selected by the mobile terminal for receiving downlink data is the target transmission point.

Optionally, the uplink data includes an SI (Scheduling Information) message or a CQI value of the target transmission point.

The feature information is the scrambling code pair uniquely corresponding to the target transmission point, the scrambling code pair includes the uplink scrambling code and the downlink scrambling code, and the uplink scrambling code and the downlink scrambling code are one-to-one corresponding to each other.

The downlink scrambling code corresponding to the target transmission point is used to perform scrambling when the target transmission point sends the downlink data to the mobile terminal; the uplink scrambling code corresponding to the target transmission point is used to perform descrambling when the target transmission point receives the uplink data sent by the mobile terminal.

The mobile terminal stores scrambling code pairs that are assigned in advance by the RNC and are one-to-one corresponding to scrambling code pairs of the transmission points in the soft cell.

The downlink scrambling code corresponding to the target transmission point is used to perform descrambling when the mobile terminal receives the downlink data sent by the target transmission point; the uplink scrambling code corresponding to the downlink scrambling code of the target transmission point is used to perform scrambling when the mobile terminal sends the uplink data to the target transmission point.

The uplink scrambling code used by the mobile terminal to send the uplink data is the same as the uplink scrambling code used by the target transmission point to receive the uplink data, and the downlink scrambling code used by the target transmission point to send the downlink data is the same as the downlink scrambling code used by the mobile terminal to receive the downlink data sent by the target transmission point.

The uplink scrambling code and the downlink scrambling code that are stored in the mobile terminal and are corresponding to the target transmission point are also one-to-one corresponding to each other.

The feature information is specifically:
the uplink scrambling code corresponding to the downlink scrambling code that is used by the target transmission point to send the downlink data.

Before the mobile terminal processes the uplink data according to the feature information corresponding to the target transmission point, and sends the processed uplink data, the method specifically includes that:
after separately receiving pilot that is sent by the transmission points in the soft cell and is scrambled by using downlink scrambling codes corresponding to the transmission points in the soft cell, the mobile terminal separately descrambles, by using downlink scrambling codes that are stored in the mobile terminal and are corresponding to the transmission points in the soft cell, the pilot quality that is scrambled by using the downlink scrambling codes corresponding to the transmission points in the soft cell, and then selects a transmission point corresponding to a downlink scrambling code with largest pilot quality obtained by means of descrambling as the target transmission point.

That the mobile terminal processes uplink data according to feature information corresponding to the target transmission point and sends processed uplink data specifically includes that:
the mobile terminal scrambles the uplink data by searching for the uplink scrambling code corresponding to the downlink scrambling code of the target transmission point and then sends scrambled uplink data, and the target transmission point descrambles the received uplink data by using the uplink scrambling code of the target transmission point.

The scrambling code pair is assigned in advance by the RNC to the target transmission point and the mobile terminal.

Another solution is that, the feature information is a serial number uniquely corresponding to the target transmission point, and correspondingly, that the mobile terminal processes uplink data according to feature information corresponding to the target transmission point, and sends processed uplink data, so that the target transmission point parses the uplink data after receiving the uplink data, and determines, according to a parsing result, that a transmission point that is selected by the mobile terminal for receiving downlink data is the target transmission point includes that:
the mobile terminal adds the serial number to the uplink data and sends uplink data to which the serial number is added, where if a serial number parsed out by the target transmission point after the uplink data is received is consistent with a locally stored serial number, the target transmission point determines that the transmission point that is selected by the mobile terminal for receiving downlink data is the target transmission point.

The uplink data includes an SI message or a CQI value of the target transmission point.

The serial number is assigned in advance by the RNC to the transmission points in the soft cell.

The serial number is uniquely corresponding to the target transmission point.

Optionally, for example, in a soft cell networking manner, there is a total of three transmission points; the RNC may assign in advance serial numbers, which respectively are 0, 1, and 2, to the three transmission points.

Optionally, when a serial number of the target transmission point selected by the mobile terminal according to the measurement result is 1, the mobile terminal adds the serial number 1 to the uplink data and sends uplink data to which the serial number 1 is added; when the serial number 1 obtained by the target transmission point by parsing the received uplink data is the same as a serial number of the target transmission point, that is, the serial number of the target transmission point is also 1, the target transmission point may determine that the target transmission point is the target transmission point that is selected by the mobile terminal for receiving downlink data.

Another solution is that, the feature information is a channelization code uniquely corresponding to the target transmission point, and correspondingly, that the mobile terminal processes uplink data according to feature information corresponding to the target transmission point, and sends processed uplink data, so that the target transmission point parses the uplink data after receiving the uplink data, and determines, according to a parsing result, that a transmission point that is selected by the mobile terminal for receiving downlink data is the target transmission point includes that:
the mobile terminal processes the uplink data by using the channelization code corresponding to the target transmission point, and sends processed uplink data, where if the target transmission point successfully parses out the uplink data according to the corresponding channelization code after receiving the uplink data, the target transmission point determines that the transmission point that is selected by the mobile terminal for receiving downlink data is the target transmission point.

Optionally, the uplink data includes an SI message or a CQI value of the target transmission point.

The channelization code is assigned in advance by the RNC.

That the mobile terminal processes the uplink data by using the channelization code corresponding to the target transmission point, and sends processed uplink data, where if the target transmission point successfully parses out the uplink data according to the corresponding channelization code after receiving the uplink data, the target transmission point determines that the transmission point that is selected by the mobile terminal for receiving downlink data is the target transmission point specifically includes that:
the mobile terminal spreads the uplink data by using the channelization code corresponding to the target transmission point, performs scrambling processing on spread uplink data by using an uplink scrambling code corresponding to the target transmission point, and then sends scrambled uplink data; the target transmission point descrambles the received uplink data by using the uplink scrambling code, and then performs despreading by using the corresponding channelization code; and if the target transmission point can parse out the uplink data, the target transmission point determines that the transmission point that is selected by the mobile terminal for receiving downlink data is the target transmission point.

Optionally, after the mobile terminal spreads the uplink data by using the channelization code corresponding to the target transmission point, the mobile terminal performs scrambling processing on the uplink data by using an uplink scrambling code corresponding to the target transmission point and then sends scrambled uplink data; the target transmission point descrambles the received uplink data by using the uplink scrambling code corresponding to the target transmission point after receiving the uplink data; and if the target transmission point can successfully descramble the uplink data, the target transmission point determines that the transmission point that is selected by the mobile terminal for receiving downlink data is the target transmission point. Further, the target transmission point despreads descrambled uplink data, and if the target transmission point can successfully despread the uplink data, the target transmission point may further determine that the transmission point that is selected by the mobile terminal for receiving downlink data is the target transmission point.

Optionally, after the mobile terminal spreads the uplink data by using the channelization code corresponding to the target transmission point, and after the mobile terminal performs scrambling processing on the uplink data by using an uplink scrambling code corresponding to the target transmission point, the mobile terminal may further add a serial number of the target transmission point to the uplink data, so as to implement that a serial number parsed out by the target transmission point is the same as the serial number of the target transmission point; further, scrambled uplink data is descrambled; if the scrambled uplink data can be successfully descrambled, the uplink data is further despread; and if the uplink data can be successfully despread, it is implemented that the target transmission point determines, by means of confirmation for multiple times, that the transmission point that is selected by the mobile terminal for receiving downlink data is the target transmission point.

Optionally, this solution may also be that, the uplink scrambling code is an uplink scrambling code selected by the mobile terminal and is not an uplink scrambling code corresponding to the target transmission point and the transmission points in the soft cell; then, after the mobile terminal spreads the uplink data by using the channelization code corresponding to the target transmission point, the mobile terminal performs scrambling processing on the uplink data by using the selected uplink scrambling code and then sends scrambled uplink data; the target transmission point descrambles the received uplink data by using the uplink scrambling code after receiving the uplink data, and then despreads descrambled uplink data by using the channelization code of the target transmission point; if the target transmission point can successfully despreads the uplink data, the target transmission point may determine that the transmission point that is selected by the mobile terminal for receiving downlink data is the target transmission point. When receiving the uplink data that is scrambled by the mobile terminal by using the selected uplink scrambling code, transmission points in the soft cell besides the target transmission point may also successfully descramble the uplink data according to the uplink scrambling code, but cannot successfully obtain the uplink data by means of despreading when despreading the descrambled uplink data by using channelization codes respectively corresponding to the transmission points.

Another solution is that, the feature information is a serial number uniquely corresponding to the target transmission point, and correspondingly, that the mobile terminal processes uplink data according to feature information corresponding to the target transmission point, and sends processed uplink data, so that the target transmission point parses the uplink data after receiving the uplink data, and determines, according to a parsing result, that a transmission point that is selected by the mobile terminal for receiving downlink data is the target transmission point includes that:
the uplink data is a CQI value of the target transmission point, and the mobile terminal performs joint coding on the serial number and the CQI value and sends the uplink data, where if a serial number parsed out by the target transmission point after the uplink data is received is consistent with a locally stored serial number, the target transmission point determines that the transmission point that is selected by the mobile terminal for receiving downlink data is the target transmission point.

Optionally, for example, in the soft cell networking manner, there is a total of three transmission points; the RNC may assign in advance serial numbers, which respectively are 0, 1, and 2, to the three transmission points.

Optionally, the mobile terminal performs joint coding on the serial number and the CQI value, that is, performing joint coding on the serial numbers 0, 1, and 2 of the total of three transmission points and the CQI value in a (20, n+5) coding mode, where n=2. That is, 2 bits are required to indicate a joint code of the serial numbers, where the joint codes are 00, 01, and 10.

Optionally, when a joint code of the target transmission point that is selected by the mobile terminal according to the measurement result is 01, the mobile terminal sends the joint code 01; when a serial number, obtained by the target transmission point by decoding according to the received joint code, corresponding to a transmission point is 1, which is the same as a serial number of the target transmission point, that is, the serial number of the target transmission point is also 1, the target transmission point may determine that the target transmission point is the transmission point that is selected by the mobile terminal for receiving downlink data.

In this embodiment, a mobile terminal measures pilot quality of transmission points in a soft cell in which the mobile terminal is located, and selects one target transmission point according to a preset rule; then, the mobile terminal processes uplink data according to feature information corresponding to the target transmission point and sends processed uplink data; and the target transmission point determines, after successfully parsing the uplink data, that a transmission point that is selected by the mobile terminal for receiving downlink data is the target transmission point. This may resolve a problem in the prior art concerning how base stations in a soft cell identify a base station that is selected by a mobile terminal for receiving downlink data.

FIG. 2 is a flowchart of another embodiment of a method for identifying a transmission point according to an embodiment of the present invention. As shown in FIG. 2, the method in this embodiment includes the following:
201: A transmission point device receives uplink data sent by a mobile terminal, where the uplink data is data that is processed by the mobile terminal according to feature information corresponding to a target transmission point.

The mobile terminal may send the uplink data to the target transmission point.

No transmission point in the soft cell other than the target transmission point can successfully parse the processed uplink data.

One solution is that, the feature information is a scrambling code pair uniquely corresponding to the target transmission point, the scrambling code pair includes an uplink scrambling code and a downlink scrambling code, and correspondingly, the uplink data is sent by the mobile terminal after the mobile terminal performs scrambling processing on the uplink data by using the uplink scrambling code corresponding to the target transmission point; and
if the target transmission point successfully parses out the uplink data according to the corresponding uplink scrambling code, the target transmission point determines that a transmission point that is selected by the mobile terminal for receiving downlink data is the target transmission point.

Optionally, the uplink data includes an SI message or a CQI value of the target transmission point.

The feature information is the scrambling code pair uniquely corresponding to the target transmission point, the scrambling code pair includes the uplink scrambling code and the downlink scrambling code, and the uplink scrambling code and the downlink scrambling code are one-to-one corresponding to each other.

The downlink scrambling code corresponding to the target transmission point is used to perform scrambling when the target transmission point sends the downlink data to the mobile terminal; the uplink scrambling code corresponding to the target transmission point is used to perform descrambling when the target transmission point receives the uplink data sent by the mobile terminal.

The mobile terminal stores scrambling code pairs that are assigned in advance by an RNC and are one-to-one corresponding to scrambling code pairs of the transmission points in the soft cell.

The downlink scrambling code corresponding to the target transmission point is used to perform descrambling when the mobile terminal receives the downlink data sent by the target transmission point; the uplink scrambling code corresponding to the downlink scrambling code of the target transmission point is used to perform scrambling when the mobile terminal sends the uplink data to the target transmission point.

The uplink scrambling code used by the mobile terminal to send the uplink data is the same as the uplink scrambling code used by the target transmission point to receive the uplink data, and the downlink scrambling code used by the target transmission point to send the downlink data is the same as the downlink scrambling code used by the mobile terminal to receive the uplink data sent by the target transmission point.

The uplink scrambling code and the downlink scrambling code that are stored in the mobile terminal and are corresponding to the target transmission point are also one-to-one corresponding to each other.

The feature information is specifically:
the uplink scrambling code corresponding to the downlink scrambling code that is used by the target transmission point to send the downlink data.

Before that a transmission point device receives uplink data sent by a mobile terminal, where the uplink data is data that is processed by the mobile terminal according to feature information corresponding to a target transmission point specifically includes that:
after separately receiving pilot that is sent by the transmission points in the soft cell and is scrambled by using downlink scrambling codes corresponding to the transmission points in the soft cell, the mobile terminal separately descrambles, by using downlink scrambling codes that are stored in the mobile terminal and are corresponding to the transmission points in the soft cell, the pilot quality that is scrambled by using the downlink scrambling codes corresponding to the transmission points in the soft cell, and then selects a transmission point corresponding to a downlink scrambling code with largest pilot quality that is obtained by means of descrambling as the target transmission point.

That a transmission point device receives uplink data sent by a mobile terminal, where the uplink data is data that is processed by the mobile terminal according to feature information corresponding to a target transmission point specifically includes that:
the mobile terminal scrambles the uplink data by searching for the uplink scrambling code corresponding to the downlink scrambling code of the target transmission point and then sends scrambled uplink data; the target transmission point descrambles the received uplink data by using the uplink scrambling code of the target transmission point; and if descrambling is successful, the target transmission point may determine that the transmission point that is selected by the mobile terminal for receiving downlink data in the soft cell is the target transmission point.

The scrambling code pair is assigned by the RNC to the target transmission point and the mobile terminal.

Another solution is that, the feature information is a serial number uniquely corresponding to the target transmission point, and correspondingly, a serial number of the transmission point is added to the uplink data.

The target transmission point parses the uplink data, and if a serial number parsed out is consistent with a locally stored serial number, the target transmission point determines that the transmission point that is selected by the mobile terminal for receiving downlink data is the target transmission point.

The uplink data includes an SI message or a CQI value of the target transmission point.

The serial number is assigned in advance by an RNC to the transmission points in the soft cell.

The serial number is uniquely corresponding to the target transmission point.

Optionally, for example, in a soft cell networking manner, there is a total of three transmission points; the RNC may assign in advance serial numbers, which respectively are 0, 1, and 2, to the three transmission points.

Optionally, when a serial number of the target transmission point selected by the mobile terminal according to the measurement result is 1, the mobile terminal adds the serial number 1 to the uplink data and sends uplink data to which the serial number 1 is added; when the serial number 1 obtained by the target transmission point by parsing the received uplink data is the same as a serial number of the target transmission point, that is, the serial number of the target transmission point is also 1, the target transmission point may determine that the target transmission point is the transmission point that is selected by the mobile terminal for receiving downlink data.

Another solution is that, the feature information is a channelization code uniquely corresponding to the target transmission point, and correspondingly, that a transmission point device receives uplink data sent by a mobile terminal, where the uplink data is data that is processed by the mobile terminal according to feature information corresponding to a target transmission point includes that:
the target transmission point receives the uplink data sent by the mobile terminal, where the uplink data is sent by the mobile terminal after the mobile terminal processes the uplink data by using the channelization code corresponding to the target transmission point; and
if the target transmission point successfully parses out the uplink data according to the corresponding channelization code, the target transmission point determines that the transmission point that is selected by the mobile terminal for receiving downlink data is the target transmission point.

Optionally, the uplink data includes an SI message or a CQI value of the target transmission point.

The channelization code is assigned by an RNC.

That the target transmission point receives the uplink data sent by the mobile terminal, where the uplink data is sent by the mobile terminal after the mobile terminal processes the uplink data by using the channelization code corresponding to the target transmission point includes that:
the mobile terminal spreads the uplink data by using the channelization code corresponding to the target transmission point, performs scrambling processing on spread uplink data by using an uplink scrambling code corresponding to the target transmission point, and then sends scrambled uplink data; the target transmission point descrambles the received uplink data by using the uplink scrambling code and then performs despreading by using the corresponding channelization code; and if the target transmission point can parse out the uplink data, the target transmission point determines that the transmission point that is selected by the mobile terminal for receiving downlink data is the target transmission point.

Optionally, after the mobile terminal spreads the uplink data by using the channelization code corresponding to the target transmission point, the mobile terminal performs scrambling processing on the uplink data by using an uplink scrambling code corresponding to the target transmission point and then sends scrambled uplink data; the target transmission point descrambles the received uplink data by using the uplink scrambling code corresponding to the target transmission point; and if the target transmission point can successfully descrambles the uplink data, the target transmission point determines that the transmission point that is selected by the mobile terminal for receiving downlink data is the target transmission point. Further, the target transmission point despreads descrambled uplink data, and if the target transmission point can successfully despread the uplink data, the target transmission point may further determine that the transmission point that is selected by the mobile terminal for receiving downlink data is the target transmission point.

Optionally, after the mobile terminal spreads the uplink data by using the channelization code corresponding to the target transmission point, and after the mobile terminal performs scrambling on the uplink data by using an uplink scrambling code corresponding to the target transmission point, the mobile terminal may further add a serial number of the target transmission point to the uplink data, so as to implement that a serial number parsed out by the target transmission point is the same as the serial number of the target transmission point; further, scrambled uplink data is descrambled; if the scrambled uplink data can be successfully descrambled, the uplink data is further despread; and if the uplink data can be successfully despread, it is implemented that the target transmission point determines, by means of confirmation for multiple times, that the transmission point that is selected by the mobile terminal for receiving downlink data is the target transmission point.

Optionally, this solution may also be that, the uplink scrambling code is an uplink scrambling code selected by the mobile terminal and is not an uplink scrambling code corresponding to the target transmission point and the transmission points in the soft cell; then, after the mobile terminal spreads the uplink data by using the channelization code corresponding to the target transmission point, the mobile terminal performs scrambling processing on the uplink data by using the selected uplink scrambling code and then sends scrambled uplink data; the target transmission point descrambles the received uplink data by using the uplink scrambling code, and then despreads descrambled uplink data by using the channelization code of the target transmission point; if the target transmission point can successfully despreads the uplink data, the target transmission point may determine that the transmission point that is selected by the mobile terminal for receiving downlink data is the target transmission point. When receiving the uplink data that is scrambled by the mobile terminal by using the selected uplink scrambling code, transmission points in the soft cell besides the target transmission point may also successfully descramble the uplink data according to the uplink scrambling code, but cannot successfully obtain the uplink data by means of despreading when despreading the descrambled uplink data by using channelization codes respectively corresponding to the transmission points.

Another solution is that, the feature information is a serial number uniquely corresponding to the target transmission point, the uplink data is sent by the mobile terminal after the mobile terminal performs joint coding by using the serial number and a CQI value of the target transmission point, and the target transmission point receives the uplink data that is sent by the mobile terminal after the mobile terminal performs joint coding by using the serial number and the CQI value of the target transmission point.

The target transmission point decodes the uplink data, and if a serial number obtained by means of decoding is consistent with a locally stored serial number, the target transmission point determines that the transmission point that is selected by the mobile terminal for receiving downlink data is the target transmission point.

The uplink data is the CQI value of the target transmission point.

Optionally, for example, in a soft cell networking manner, there is a total of three transmission points; an RNC may assign in advance serial numbers, which respectively are 0, 1, and 2, to the three transmission points.

Optionally, the mobile terminal performs joint coding on the serial number and the CQI value, that is, performing joint coding on the serial numbers 0, 1, and 2 of the total of three transmission points and the CQI value in a (20, n+5) coding mode, where n=2. That is, 2 bits are required to indicate a joint code of the serial numbers, where the joint codes are 00, 01, and 10.

Optionally, when a joint code of the target transmission point that is selected by the mobile terminal according to the measurement result is 01, the mobile terminal sends the joint code 01; when a serial number, obtained by the target transmission point by performing decoding according to the received joint code, corresponding to a transmission point is 1, which is the same as a serial number of the target transmission point, that is, the serial number of the target transmission point is also 1, the target transmission point may determine that the target transmission point is the transmission point that is selected by the mobile terminal for receiving downlink data.

202: Parse the uplink data, and determine, according to a parsing result, whether a transmission point that is selected by the mobile terminal for receiving downlink data in a soft cell is the target transmission point.

The target transmission point may send downlink data to the mobile terminal.

The mobile terminal may receive the downlink data sent by the target transmission point.

In this embodiment, a transmission point device parses received uplink data sent by a mobile terminal, where the uplink data is data that is processed by the mobile terminal according to feature information corresponding to a target transmission point; and if the transmission point device can successfully parse out the uplink data, the transmission point device may determine that a transmission point that is selected by the mobile terminal for receiving downlink data in a soft cell is the target transmission point. This may resolve a problem in the prior art concerning how base stations in a soft cell identify a base station that is selected by a mobile terminal for receiving downlink data.

FIG. 3 is a schematic structural diagram of an embodiment of a mobile terminal according to an embodiment of the present invention. The mobile terminal may be configured to execute the foregoing related method for identifying a transmission point. As shown in FIG. 3, the mobile terminal includes a measuring module 31, a selecting module 32, a processing module 33, and a sending module 34.

The measuring module 31 is configured to measure pilot quality of transmission points in a soft cell in which the mobile terminal is located; the selecting module 32 is configured to select one target transmission point according to a measurement result obtained by the measuring module and a preset rule to receive downlink data; the processing module 33 is configured to process uplink data according to feature information corresponding to the target transmission point; and the sending module 34 is configured to send processed uplink data, so that the target transmission point parses the uplink data after receiving the uplink data, and determines, according to a parsing result, that a transmission point that is selected by the mobile terminal for receiving downlink data is the target transmission point.

The feature information is a scrambling code pair uniquely corresponding to the target transmission point, and the scrambling code pair includes an uplink scrambling code and a downlink scrambling code; correspondingly, the processing module 33 is specifically configured to perform scrambling processing on the uplink data by using the uplink scrambling code corresponding to the target transmission point; and the sending module 34 is specifically configured to send scrambled uplink data, where if the target transmission point successfully parses out the uplink data according to the corresponding uplink scrambling code after receiving the uplink data, the target transmission point determines that the transmission point that is selected by the mobile terminal for receiving downlink data is the target transmission point.

The feature information is a serial number uniquely corresponding to the target transmission point. Correspondingly, the processing module 33 is specifically configured to add the serial number to the uplink data; and the sending module 34 is specifically configured to send the uplink data that is processed by the processing module, where if a serial number parsed out by the target transmission point after the uplink data is received is consistent with a locally stored serial number, the target transmission point determines that the transmission point that is selected by the mobile terminal for receiving downlink data is the target transmission point.

The feature information is a channelization code uniquely corresponding to the target transmission point. Correspondingly, the processing module 33 is specifically configured to process the uplink data by using the channelization code corresponding to the target transmission point; and the sending module 34 is specifically configured to send processed uplink data, where if the target transmission point successfully parses out the uplink data according to the corresponding channelization code after receiving the uplink data, the target transmission point determines that the transmission point that is selected by the mobile terminal for receiving downlink data is the target transmission point.

The uplink data includes an SI message or a CQI value of the target transmission point.

The feature information is a serial number uniquely corresponding to the target transmission point, the uplink data is a CQI value of the target transmission point. Correspondingly, the processing module 33 is specifically configured to perform joint coding on the serial number and the CQI value; and the sending module 34 is specifically configured to send the uplink data that is processed by the processing module, where if a serial number parsed out by the target transmission point after the uplink data is received is consistent with a locally stored serial number, the target transmission point determines that the transmission point that is selected by the mobile terminal for receiving downlink data is the target transmission point.

A specific function of the processing module is consistent with that in the corresponding method embodiment, which is not described herein again.

The foregoing functional modules may be used to execute the procedure of the method for identifying a transmission point according to this embodiment of the present invention, and are mainly used to: measure, by using a measuring module of a mobile terminal, pilot quality of transmission points in a soft cell; select, by using a selecting module, one target transmission point according to a preset rule; process, by using a processing module, uplink data according to feature information corresponding to the target transmission point; and send, by using a sending module, processed data. Reference may be made to the descriptions of the method embodiments for details of a specific operating principle of the functional modules, which are not described herein again.

By using the foregoing modules, the mobile terminal according to this embodiment may select one target transmission point according to pilot quality information of transmission points and a preset rule; then, the mobile terminal processes uplink data according to feature information corresponding to the target transmission point and sends processed uplink data. The target transmission point determines, after successfully parsing the uplink data, that a transmission point that is selected by the mobile terminal for receiving downlink data is the target transmission point. This may resolve a problem in the prior art concerning how base stations in a soft cell identify a base station that is selected by a mobile terminal for receiving downlink data.

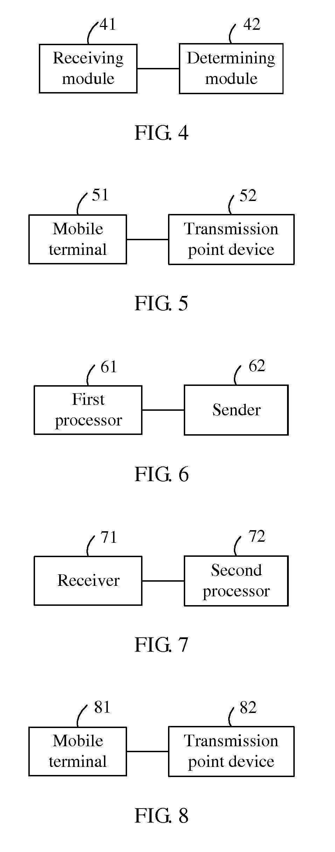

FIG. 4 is a schematic structural diagram of an embodiment of a transmission point device according to an embodiment of the present invention. The transmission point device may be configured to execute the foregoing related method for identifying a transmission point. As shown in FIG. 4, the transmission point device includes a receiving module 41 and a determining module 42.

The receiving module 41 is configured to receive uplink data sent by a mobile terminal, where the uplink data is data that is processed by the mobile terminal according to feature information corresponding to a target transmission point; and the determining module 42 is configured to parse the uplink data, and determine, according to a parsing result, whether a transmission point that is selected by the mobile terminal for receiving downlink data in a soft cell is the target transmission point.

The feature information is a scrambling code pair uniquely corresponding to the target transmission point, and the scrambling code pair includes an uplink scrambling code and a downlink scrambling code; correspondingly, the uplink data is sent by the mobile terminal after the mobile terminal performs scrambling processing on the uplink data by using the uplink scrambling code corresponding to the target transmission point; and the determining module 42 is specifically configured to: if the uplink data is successfully parsed out according to the corresponding uplink scrambling code, determine, by using the target transmission point, that the transmission point that is selected by the mobile terminal for receiving downlink data is the target transmission point.

The feature information is a serial number uniquely corresponding to the target transmission point; correspondingly, an internal serial number of the transmission point is added to the uplink data; and the determining module 42 is specifically configured to: parse the uplink data, and if a serial number parsed out is consistent with a locally stored serial number, determine, by using the target transmission point, that the transmission point that is selected by the mobile terminal for receiving downlink data is the target transmission point.

The feature information is a channelization code uniquely corresponding to the target transmission point, and correspondingly, the uplink data is sent by the mobile terminal after the mobile terminal processes the uplink data by using the channelization code corresponding to the target transmission point; and the determining module 42 is specifically configured to: if the uplink data is successfully parsed out according to the corresponding channelization code, determine, by using the target transmission point, that the transmission point that is selected by the mobile terminal for receiving downlink data is the target transmission point.

The uplink data includes an SI message or a CQI value of the target transmission point.

The feature information is a serial number uniquely corresponding to the target transmission point; correspondingly, the uplink data is sent by the mobile terminal after the mobile terminal performs joint coding by using the serial number and a CQI value of the target transmission point; and the determining module 42 is specifically configured to: decode the uplink data, and if a serial number obtained by means of decoding is consistent with a locally stored serial number, determine, by using the target transmission point, that the transmission point that is selected by the mobile terminal for receiving downlink data is the target transmission point.

Specific functions of the modules are consistent with those in the corresponding method embodiment, which are not described herein again.

The foregoing functional modules may be used to execute the procedure of the method for identifying a transmission point provided in this embodiment of the present invention, and are mainly used to parse received uplink data that is sent by a mobile terminal, and determine, according to whether the uplink data can be successfully parsed out, whether the transmission point device is a transmission point that is selected by the mobile terminal for receiving downlink data in a soft cell. Reference may be made to the descriptions of the method embodiments for details of a specific operating principle of the functional modules, which are not described herein again.

By using the foregoing modules, the transmission point device in this embodiment may implement parsing uplink data received from a mobile terminal, and determining, according to a parsing result, whether the transmission point device is a target transmission point that is selected by the mobile terminal for receiving downlink data. This may resolve a problem in the prior art concerning how base stations in a soft cell identify a base station that is selected by a mobile terminal for receiving downlink data.

FIG. 5 is a schematic structural diagram of an embodiment of a network system according to an embodiment of the present invention. This embodiment is implemented based on the foregoing related embodiments. As shown in FIG. 5, the network system in this embodiment includes a mobile terminal 51 and a transmission point device 52.

Preferably, the mobile terminal and the transmission point device in the network system provided in this embodiment of the present invention may be implemented based on either of the foregoing device embodiments, and may be used to execute either embodiment of the method for identifying a transmission point. Reference may be made to the descriptions of the method embodiments and the device embodiments for details of a specific operating principle of the mobile terminal and the transmission point device, which are not described herein again.

According to the network system provided in this embodiment, a mobile terminal measures pilot quality of transmission points in a soft cell in which the mobile terminal is located, and selects one target transmission point according to a preset rule; then, the mobile terminal processes uplink data according to feature information corresponding to the target transmission point and sends processed uplink data; and the target transmission point determines, after successfully parsing the uplink data, that a transmission point that is selected by the mobile terminal for receiving downlink data is the target transmission point. This may resolve a problem in the prior art concerning how base stations in a soft cell identify a base station that is selected by a mobile terminal for receiving downlink data.

FIG. 6 is a schematic structural diagram of another embodiment of a mobile terminal according to an embodiment of the present invention. As shown in FIG. 6, the mobile terminal includes a first processor 61 and a sender 62.

The first processor 61 is configured to measure pilot quality of transmission points in a soft cell in which the mobile terminal is located; select one target transmission point according to a measurement result and a preset rule to receive downlink data; and process uplink data according to feature information corresponding to the target transmission point. The sender 62 is configured to send the uplink data processed by the first processor, so that the target transmission point parses the uplink data after receiving the uplink data, and determines, according to a parsing result, that a transmission point that is selected by the mobile terminal for receiving downlink data is the target transmission point.

The feature information is a scrambling code pair uniquely corresponding to the target transmission point, and the scrambling code pair includes an uplink scrambling code and a downlink scrambling code; the first processor 61 is further configured to perform scrambling processing on the uplink data by using the uplink scrambling code corresponding to the target transmission point.

The feature information is a serial number uniquely corresponding to the target transmission point; and the first processor 61 is further configured to add the serial number to the uplink data.

The feature information is a channelization code uniquely corresponding to the target transmission point; the first processor 61 is further configured to process the uplink data by using the channelization code corresponding to the target transmission point.

The feature information is a serial number uniquely corresponding to the target transmission point, and the uplink data is a CQI value of the target transmission point; the first processor 61 is further configured to perform joint coding on the serial number and the CQI value.

The foregoing functional modules may be used to execute the procedure of the method for identifying a transmission point according to this embodiment of the present invention, and are mainly used to: measure, by using a first processor of a mobile terminal, pilot quality of transmission points in a soft cell, select one target transmission point according to a preset rule, and then, process uplink data according to feature information corresponding to the target transmission point; and send processed data. Reference may be made to the descriptions of the method embodiments for details of a specific operating principle of the functional modules, which are not described herein again.

By using the foregoing modules, the mobile terminal in this embodiment may select one target transmission point according to pilot quality information of transmission points and a preset rule; then, the mobile terminal processes uplink data according to feature information corresponding to the target transmission point and sends processed uplink data. The target transmission point determines, after successfully parsing the uplink data, that a transmission point that is selected by the mobile terminal for receiving downlink data is the target transmission point. This may resolve a problem in the prior art concerning how base stations in a soft cell identify a base station that is selected by a mobile terminal for receiving downlink data.

FIG. 7 is a schematic structural diagram of another embodiment of a transmission point device according to an embodiment of the present invention. As shown in FIG. 7, the transmission point device includes a receiver 71 and a second processor 72. The receiver 71 is configured to receive uplink data sent by a mobile terminal, where the uplink data is data that is processed by the mobile terminal according to feature information corresponding to a target transmission point. The second processor 72 is configured to parse the uplink data received by the receiver, and determine, according to a parsing result, whether a transmission point that is selected by the mobile terminal for receiving downlink data in a soft cell is the target transmission point.

The feature information is a scrambling code pair uniquely corresponding to the target transmission point, and the scrambling code pair includes an uplink scrambling code and a downlink scrambling code; the second processor 72 is specifically configured to: if the uplink data is successfully parsed out according to the corresponding uplink scrambling code, determine, by using the target transmission point, that the transmission point that is selected by the mobile terminal for receiving downlink data is the target transmission point.

The feature information is a serial number uniquely corresponding to the target transmission point, and the second processor 72 is specifically configured to: parse the uplink data, and if a serial number parsed out is consistent with a locally stored serial number, determine, by using the target transmission point, that the transmission point that is selected by the mobile terminal for receiving downlink data is the target transmission point.

The feature information is a channelization code uniquely corresponding to the target transmission point; the second processor 72 is specifically configured to: if the uplink data is successfully parsed out according to the corresponding channelization code, determine, by using the target transmission point, that the transmission point that is selected by the mobile terminal for receiving downlink data is the target transmission point.

The feature information is a serial number uniquely corresponding to the target transmission point, the uplink data is sent by the mobile terminal after the mobile terminal performs joint coding by using the serial number and a CQI value of the target transmission point; the second processor 72 is specifically configured to: decode the uplink data, and if a serial number obtained by means of decoding is consistent with a locally stored serial number, determine, by using the target transmission point, that the transmission point that is selected by the mobile terminal for receiving downlink data is the target transmission point.

The foregoing functional modules may be used to execute the procedure of the method for identifying a transmission point according to the embodiments of the present invention, and are mainly used to receive, by using a second processor of a transmission point device, uplink data sent by a mobile terminal, and parse the received uplink data. Reference may be made to the descriptions of the method embodiments for details of a specific operating principle of the functional modules, which are not described herein again.

By using the foregoing modules, the transmission point device according to this embodiment may implement parsing uplink data received from a mobile terminal, and determining, according to a parsing result, whether the transmission point device is a target transmission point that is selected by the mobile terminal for receiving downlink data. This may resolve a problem in the prior art concerning how base stations in a soft cell identify a base station that is selected by a mobile terminal for receiving downlink data.

FIG. 8 is a schematic structural diagram of another embodiment of a network system according to an embodiment of the present invention. This embodiment is implemented based on the foregoing related embodiments. As shown in FIG. 8, the network system in this embodiment includes a mobile terminal 81 and a transmission point device 82.

Preferably, the mobile terminal and the transmission point device in the network system according to this embodiment of the present invention may be implemented based on the foregoing related device embodiments, and may be used to execute either embodiment of the method for identifying a transmission point. Reference may be made to the descriptions of the method embodiments and the device embodiments for details of a specific operating principle of the mobile terminal and the transmission point device, which are not described herein again.

In the network system in this embodiment, a mobile terminal measures pilot quality of transmission points in a soft cell in which the mobile terminal is located, and selects one target transmission point according to a preset rule; then, the mobile terminal processes uplink data according to feature information corresponding to the target transmission point and sends processed uplink data; and the target transmission point determines, after successfully parsing the uplink data, that a transmission point that is selected by the mobile terminal for receiving downlink data is the target transmission point. This may resolve a problem in the prior art concerning how base stations in a soft cell identify a base station that is selected by a mobile terminal for receiving downlink data.

In the several embodiments provided in the present invention, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor to perform a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

It may be clearly understood by a person skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or part of the functions described above. For a detailed working process of the foregoing apparatus, reference may be made to a corresponding process in the foregoing method embodiments, and details are not described herein again.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A method for identifying a transmission point, comprising:
measuring, by a mobile terminal, pilot quality of transmission points in a soft cell in which the mobile terminal is located, and selecting one target transmission point according to a measurement result and a preset rule to receive downlink data; and
processing, by the mobile terminal, uplink data according to feature information corresponding to the target transmission point, and sending processed uplink data, so that the target transmission point parses the uplink data after receiving the uplink data, and determines, according to a parsing result, that a transmission point that is selected by the mobile terminal for receiving downlink data is the target transmission point.

2. The method according to claim 1, wherein the feature information is a scrambling code pair uniquely corresponding to the target transmission point, and the scrambling code pair comprises an uplink scrambling code and a downlink scrambling code; and correspondingly, the processing, by the mobile terminal, uplink data according to feature information corresponding to the target transmission point, and sending processed uplink data, so that the target transmission point parses the uplink data after receiving the uplink data, and determines, according to a parsing result, that a transmission point that is selected by the mobile terminal for receiving downlink data is the target transmission point comprises:
performing, by the mobile terminal, scrambling processing on the uplink data by using the uplink scrambling code corresponding to the target transmission point, and sending scrambled uplink data, wherein if the target transmission point successfully parses out the uplink data according to the corresponding uplink scrambling code after receiving the uplink data, the target transmission point determines that the transmission point that is selected by the mobile terminal for receiving downlink data is the target transmission point.

3. The method according to claim 1, wherein the feature information is a serial number uniquely corresponding to the target transmission point; and correspondingly, the processing, by the mobile terminal, uplink data according to feature information corresponding to the target transmission point, and sending processed uplink data, so that the target transmission point parses the uplink data after receiving the uplink data, and determines, according to a parsing result, that a transmission point that is selected by the mobile terminal for receiving downlink data is the target transmission point comprises:
adding, by the mobile terminal, the serial number to the uplink data, and sending uplink data to which the serial number is added, wherein if a serial number parsed out from the uplink data by the target transmission point after the uplink data is received is same with a serial number stored by the target transmission point, the target transmission point determines that the transmission point that is selected by the mobile terminal for receiving downlink data is the target transmission point.

4. The method according to claim 1, wherein the feature information is a channelization code uniquely corresponding to the target transmission point; and correspondingly, the processing, by the mobile terminal, uplink data according to feature information corresponding to the target transmission point, and sending processed uplink data, so that the target transmission point parses the uplink data after receiving the uplink data, and determines, according to a parsing result, that a transmission point that is selected by the mobile terminal for receiving downlink data is the target transmission point comprises:
processing, by the mobile terminal, the uplink data by using the channelization code corresponding to the target transmission point, and sending processed uplink data, wherein if the target transmission point successfully parses out the uplink data according to the corresponding channelization code after receiving the uplink data, the target transmission point determines that the transmission point that is selected by the mobile terminal for receiving downlink data is the target transmission point.

5. The method according to any one of claims 1 to 4, wherein the uplink data comprises an SI message or a channel quality indicator CQI value of the target transmission point.

6. The method according to claim 1, wherein the feature information is a serial number uniquely corresponding to the target transmission point; and correspondingly, the processing, by the mobile terminal, uplink data according to feature information corresponding to the target transmission point, and sending processed uplink data, so that the target transmission point parses the uplink data after receiving the uplink data, and determines, according to a parsing result, that a transmission point that is selected by the mobile terminal for receiving downlink data is the target transmission point comprises:
the uplink data is a CQI value of the target transmission point; performing, by the mobile terminal, joint coding on the serial number and the CQI value and sending the uplink data, wherein if a serial number parsed out by the target transmission point after the uplink data is received is same with a locally stored serial number, the target transmission point determines that the transmission point that is selected by the mobile terminal for receiving downlink data is the target transmission point.

7. A method for identifying a transmission point, comprising:
receiving uplink data sent by a mobile terminal, wherein the uplink data is data that is processed by the mobile terminal according to feature information corresponding to a target transmission point; and
parsing the uplink data, and determining, according to a parsing result, whether a transmission point that is selected by the mobile terminal for receiving downlink data in a soft cell is the target transmission point.

8. The method according to claim 7, wherein the feature information is a scrambling code pair uniquely corresponding to the target transmission point, the scrambling code pair comprises an uplink scrambling code and a downlink scrambling code, and correspondingly, the uplink data is sent by the mobile terminal after the mobile terminal performs scrambling processing on the uplink data by using the uplink scrambling code corresponding to the target transmission point; and
the parsing the uplink data, and determining, according to a parsing result, whether a transmission point that is selected by the mobile terminal for receiving downlink data in a soft cell is the target transmission point comprises:
if the target transmission point successfully parses out the uplink data according to the corresponding uplink scrambling code, determining, by the target transmission point, that the transmission point that is selected by the mobile terminal for receiving downlink data is the target transmission point.

9. The method according to claim 7, wherein the feature information is a serial number uniquely corresponding to the target transmission point, and correspondingly, a serial number of the transmission point is added to the uplink data; and
the parsing the uplink data, and determining, according to a parsing result, whether a transmission point that is selected by the mobile terminal for receiving downlink data in a soft cell is the target transmission point comprises:
parsing, by the target transmission point, the uplink data; and if a serial number parsed out is same with a locally stored serial number, determining, by the target transmission point, that the transmission point that is selected by the mobile terminal for receiving downlink data is the target transmission point.

10. The method according to claim 7, wherein the feature information is a channelization code uniquely corresponding to the target transmission point, and correspondingly, the uplink data is sent by the mobile terminal after the mobile terminal processes the uplink data by using the channelization code corresponding to the target transmission point; and
the parsing the uplink data, and determining, according to a parsing result, whether a transmission point that is selected by the mobile terminal for receiving downlink data in a soft cell is the target transmission point comprises:
if the target transmission point successfully parses out the uplink data according to the corresponding channelization code, determining, by the target transmission point, that the transmission point that is selected by the mobile terminal for receiving downlink data is the target transmission point.

11. The method according to any one of claims 7 to 10, wherein the uplink data comprises an SI message or a CQI value of the target transmission point.

12. The method according to claim 7, wherein the feature information is a serial number uniquely corresponding to the target transmission point, and correspondingly,
the uplink data is sent by the mobile terminal after the mobile terminal performs joint coding by using the serial number and a CQI value of the target transmission point; and
the parsing the uplink data, and determining, according to a parsing result, whether a transmission point that is selected by the mobile terminal for receiving downlink data in a soft cell is the target transmission point comprises:
decoding, by the target transmission point, the uplink data; and if a serial number obtained by means of decoding is same with a locally stored serial number, determining, by the target transmission point, that the transmission point that is selected by the mobile terminal for receiving downlink data is the target transmission point.

13. A mobile terminal, comprising:
a measuring module, configured to measure pilot quality of transmission points in a soft cell in which the mobile terminal is located;
a selecting module, configured to select one target transmission point according to a measurement result obtained by the measuring module and a preset rule to receive downlink data;
a processing module, configured to process uplink data according to feature information corresponding to the target transmission point; and
a sending module, configured to send processed uplink data, so that the target transmission point parses the uplink data after receiving the uplink data, and determines, according to a parsing result, that a transmission point that is selected by the mobile terminal for receiving downlink data is the target transmission point.

14. The mobile terminal according to claim 13, wherein the feature information is a scrambling code pair uniquely corresponding to the target transmission point, the scrambling code pair comprises an uplink scrambling code and a downlink scrambling code, and correspondingly,
the processing module is specifically configured to perform scrambling processing on the uplink data by using the uplink scrambling code corresponding to the target transmission point; and
the sending module is specifically configured to send scrambled uplink data, wherein if the target transmission point successfully parses out the uplink data according to the corresponding uplink scrambling code after receiving the uplink data, the target transmission point determines that the transmission point that is selected by the mobile terminal for receiving downlink data is the target transmission point.

15. The mobile terminal according to claim 13, wherein the feature information is a serial number uniquely corresponding to the target transmission point, and correspondingly,
the processing module is specifically configured to add the serial number to the uplink data; and
the sending module is specifically configured to send the uplink data that is processed by the processing module, wherein if a serial number parsed out by the target transmission point after the uplink data is received is same with a locally stored serial number, the target transmission point determines that the transmission point that is selected by the mobile terminal for receiving downlink data is the target transmission point.

16. The mobile terminal according to claim 13, wherein the feature information is a channelization code uniquely corresponding to the target transmission point, and correspondingly,
the processing module is specifically configured to process the uplink data by using the channelization code corresponding to the target transmission point; and
the sending module is specifically configured to send processed uplink data, wherein if the target transmission point successfully parses out the uplink data according to the corresponding channelization code after receiving the uplink data, the target transmission point determines that the transmission point that is selected by the mobile terminal for receiving downlink data is the target transmission point.

17. The mobile terminal according to any one of claims 13 to 16, wherein the uplink data comprises an SI message or a CQI value of the target transmission point.

18. The mobile terminal according to claim 13, wherein the feature information is a serial number uniquely corresponding to the target transmission point, the uplink data is a CQI value of the target transmission point, and correspondingly,
the processing module is specifically configured to perform joint coding on the serial number and the CQI value; and
the sending module is specifically configured to send the uplink data that is processed by the processing module, wherein if a serial number parsed out by the target transmission point after the uplink data is received is same with a locally stored serial number, the target transmission point determines that the transmission point that is selected by the mobile terminal for receiving downlink data is the target transmission point.

19. A transmission point device, comprising:
a receiving module, configured to receive uplink data sent by a mobile terminal, wherein the uplink data is data that is processed by the mobile terminal according to feature information corresponding to a target transmission point; and
a determining module, configured to parse the uplink data, and determine, according to a parsing result, whether a transmission point that is selected by the mobile terminal for receiving downlink data in a soft cell is the target transmission point.

20. The transmission point device according to claim 19, wherein the feature information is a scrambling code pair uniquely corresponding to the target transmission point, the scrambling code pair comprises an uplink scrambling code and a downlink scrambling code, and correspondingly, the uplink data is sent by the mobile terminal after the mobile terminal performs scrambling processing on the uplink data by using the uplink scrambling code corresponding to the target transmission point; and
the determining module is specifically configured to: if the uplink data is successfully parsed out according to the corresponding uplink scrambling code, determine, by using the target transmission point, that the transmission point that is selected by the mobile terminal for receiving downlink data is the target transmission point.

21. The transmission point device according to claim 19, wherein the feature information is a serial number uniquely corresponding to the target transmission point, and correspondingly, an internal serial number of the transmission point is added to the uplink data; and
the determining module is specifically configured to: parse the uplink data, and if a serial number parsed out is same with a locally stored serial number, determine, by using the target transmission point, that the transmission point that is selected by the mobile terminal for receiving downlink data is the target transmission point.

22. The transmission point device according to claim 19, wherein the feature information is a channelization code uniquely corresponding to the target transmission point, and correspondingly, the uplink data is sent by the mobile terminal after the mobile terminal processes the uplink data by using the channelization code corresponding to the target transmission point; and
the determining module is specifically configured to: if the uplink data is successfully parsed out according to the corresponding channelization code, determine, by using the target transmission point, that the transmission point that is selected by the mobile terminal for receiving downlink data is the target transmission point.

23. The transmission point device according to any one of claims 19 to 22, wherein the uplink data comprises an SI message or a CQI value of the target transmission point.

24. The transmission point device according to claim 19, wherein the feature information is a serial number uniquely corresponding to the target transmission point, and correspondingly, the uplink data is sent by the mobile terminal after the mobile terminal performs joint coding by using the serial number and a CQI value of the target transmission point; and
the determining module is specifically configured to: decode the uplink data, and if a serial number obtained by means of decoding is same with a locally stored serial number, determine, by using the target transmission point, that the transmission point that is selected by the mobile terminal for receiving downlink data is the target transmission point.

25. A network system, comprising:
the mobile terminal according to any one of claims 13 to 18; and
the transmission point device according to any one of claims 19 to 24.

26. A mobile terminal, comprising a first processor and a sender, wherein:
the first processor is configured to measure pilot quality of transmission points in a soft cell in which the mobile terminal is located; select one target transmission point according to a measurement result and a preset rule to receive downlink data; and process uplink data according to feature information corresponding to the target transmission point; and
the sender is configured to send the uplink data processed by the first processor, so that the target transmission point parses the uplink data after receiving the uplink data, and determines, according to a parsing result, that a transmission point that is selected by the mobile terminal for receiving downlink data is the target transmission point.

27. The mobile terminal according to claim 26, wherein the feature information is a scrambling code pair uniquely corresponding to the target transmission point, and the scrambling code pair comprises an uplink scrambling code and a downlink scrambling code; and
the first processor is further configured to perform scrambling processing on the uplink data by using the uplink scrambling code corresponding to the target transmission point.

28. The mobile terminal according to claim 26, wherein the feature information is a serial number uniquely corresponding to the target transmission point; and
the first processor is further configured to add the serial number to the uplink data.

29. The mobile terminal according to claim 26, wherein the feature information is a channelization code uniquely corresponding to the target transmission point; and
the first processor is further configured to process the uplink data by using the channelization code corresponding to the target transmission point.

30. The mobile terminal according to claim 26, wherein the feature information is a serial number uniquely corresponding to the target transmission point, and the uplink data is a CQI value of the target transmission point; and
the first processor is further configured to perform joint coding on the serial number and the CQI value.

31. A transmission point device, comprising a receiver and a second processor, wherein:
the receiver is configured to receive uplink data sent by a mobile terminal, wherein the uplink data is data that is processed by the mobile terminal according to feature information corresponding to a target transmission point; and
the second processor is configured to parse the uplink data received by the receiver, and determine, according to a parsing result, whether a transmission point that is selected by the mobile terminal for receiving downlink data in a soft cell is the target transmission point.

32. The transmission point device according to claim 31, wherein the feature information is a scrambling code pair uniquely corresponding to the target transmission point, and the scrambling code pair comprises an uplink scrambling code and a downlink scrambling code; and
the second processor is specifically configured to: if the uplink data is successfully parsed out according to the corresponding uplink scrambling code, determine, by using the target transmission point, that the transmission point that is selected by the mobile terminal for receiving downlink data is the target transmission point.

33. The transmission point device according to claim 31, wherein the feature information is a serial number uniquely corresponding to the target transmission point; and
the second processor is specifically configured to: parse the uplink data, and if a serial number parsed out is same with a locally stored serial number, determine, by using the target transmission point, that the transmission point that is selected by the mobile terminal for receiving downlink data is the target transmission point.

34. The transmission point device according to claim 31, wherein the feature information is a channelization code uniquely corresponding to the target transmission point; and
the second processor is specifically configured to: if the uplink data is successfully parsed out according to the corresponding channelization code, determine, by using the target transmission point, that the transmission point that is selected by the mobile terminal for receiving downlink data is the target transmission point.

35. The transmission point device according to claim 31, wherein the feature information is a serial number uniquely corresponding to the target transmission point, and the uplink data is sent by the mobile terminal after the mobile terminal performs joint coding by using the serial number and a CQI value of the target transmission point; and
the second processor is specifically configured to: decode the uplink data, and if a serial number obtained by means of decoding is same with a locally stored serial number, determine, by using the target transmission point, that the transmission point that is selected by the mobile terminal for receiving downlink data is the target transmission point.

36. A network system, comprising:
the mobile terminal according to any one of claims 26 to 30; and
the transmission point device according to any one of claims 31 to 35.
